# EUROPEAN PATENT SPECIFICATION

(11) **EP 4 594 993 B1**
(45) Date of publication and mention of the grant of the patent: **18.11.2026**
(21) Application number: 22963635.2
(22) Date of filing: 15.12.2022
(51) Int. Cl.: G06T 5/50, G06T 7/30, G06T 5/20, H04N 23/698, G06T 7/11, G06T 7/20, G06T 7/62, G06T 3/40, G06T 3/4038, H04N 23/68

(54) **METHOD AND APPARATUS FOR STITCHING FRAMES OF IMAGE COMPRISING MOVING OBJECTS**
VERFAHREN UND VORRICHTUNG ZUM ZUSAMMENFÜGEN VON BILDRAHMEN MIT BEWEGLICHEN OBJEKTEN
PROCÉDÉ ET APPAREIL PERMETTANT D'ASSEMBLER DES TRAMES D'IMAGE COMPRENANT DES OBJETS MOBILES

(30) Priority: 29.10.2022 IN 202211061694
(43) Date of publication of application: 06.08.2025
(73) Proprietor: Samsung Electronics Co., Ltd., Suwon-si, Gyeonggi-do 16677 (KR)
(72) Inventor: KUMAR, Vikas, Noida, 201301 (IN); SHARMA, Himanshu, Noida, 201301 (IN); KUMAR, Gopal, Noida, 201301 (IN); KUMAR, Shubham, Noida, 201301 (IN)
(74) Representative: Appleyard Lees IP LLP
(86) International application number: PCT/KR2022/020514
(87) International publication number: WO 2024/090674

(56) References cited:
- CN-A- 104 392 416
- CN-A- 105 827 946
- CN-A- 109 146 782
- KR-B1- 101 908 068
- US-A1- 2016 050 368
- US-A1- 2018 095 533
- US-A1- 2019 019 299
- US-A1- 2022 303 464
- DUKE GLEDHILL: "3D Panoramic Imaging for Virtual Environment Construction", 12 May 2009 (2009-05-12), XP055360529, Retrieved from the Internet <URL:http://eprints.hud.ac.uk/6981/1/dgledhillfinalthesis.pdf> [retrieved on 20170330]

## Description

### Technical Field

The present subject matter generally relates to generating a stitched image in a panoramic view, and particularly relates to a method and a apparatus for generating the stitched image by stitching frames of an image comprising one or more moving objects.

### Background Art

In existing system for creating a panoramic image moving objects are identified so that image stitching can be correctly done for generating aligned image. Since there is overlap reason of moving object in various frame, that leads issue in image stitching. Since moving object appears across overlapping regions, while capturing panorama, moving objects in the panorama image cannot be produced with motion effect, hence Panoramic image has been still in nature.

The panorama is wide-angle view of photography. Multiple frames covering wide angle depending on continuous frames captured for wide view. Stitching captured frames to make a single shot. Available Panoramic solutions are static i.e. static background or still view.

Currently, the panorama mode includes a number of issues such as, generated panorama image shows all objects as static whereas real life view may have few objects in motion, and a frame stitching leads to blurriness for the moving object.

Proper panorama image is not generated when captured frames have moving objects, reasons for failure are that moving object trajectory or overlapping region is not followed, on the same time masking and recreating of trajectory path is not done, and stitching of frames while phone is in motion to capture panoramic image is not adjusted based on the motion of moving object appearing across multiple frames.

A conventional solution discloses a method for stitching of multiple frames to form a wide view static image (static panorama). All objects whether static or dynamic are shown as static in final image generated
Another conventional solution discloses a method for providing information and improve the quality of digital entertainment by a panoramic video as a counterpart of the image stitching. However, the other conventional solution also does not support to show moving objects as objects in motion.

Drawbacks with the conventional solutions include moving object trajectory or overlapping region is not followed, on the same time masking and recreating of trajectory path is not done, if more than one objects are presents and moving towards on another, they are unable to handle to produce liveness in image, and stitching of frames while phone is in motion to capture panoramic image is not adjusted based on the motion of moving object appearing across multiple frames.

Prior art showing solutions in these directions are KR101908068B1, US2016/050368A1, US2018/095533A1, US2019/019299A1, US2022/303464A1, CN104392416A, CN109146782A, CN105827946A and the thesis "3D Panoramic Imaging for Virtual Environment Construction" by Duke Gledhill.

There is a need for a solution to overcome the above-mentioned drawbacks.

### Disclosure of Invention

### Solution to Problem

This summary is provided to introduce a selection of concepts in a simplified format that are further described in the detailed description of the present disclosure. This summary is not intended to identify key or essential inventive concepts of the claimed subject matter, nor is it intended for determining the scope of the claimed subject matter. In accordance with the purposes of the disclosure, the present disclosure as embodied and broadly described herein, describes method and system for providing suggestions for maintaining personal hygiene of a user. The invention is defined by the scope of the appended claims.

According to an embodiment of the present disclosure, a method for generating a stitched image by an electronic device is disclosed. The method may comprise obtaining an input stream including a plurality of frames through an image capturing device. The method may comprise identifying one or more moving objects and one or more timestamps associated with movement of the one or more moving objects from a first frame and a second frame selected among the plurality of frames. The method may comprise determining a plurality of attributes associated with the one or more moving objects from at least one overlapping region of the first frame and the second frame. The method may comprise normalizing the determined plurality of attributes with respect to a plurality of device attributes associated with the image capturing device. The method may comprise determining a trajectory, associated with the one or more moving objects and a moving region of the one or more moving objects in the first frame and the second frame based on the normalized plurality of attributes. The method may comprise performing one of stitching the first frame at a first location of the at least one overlapping region where the one or more moving objects are present, wherein the trajectory from the first frame is masked to regenerate a masked portion of the second frame, and stitching the first frame at a second location of the at least one overlapping region where the one or more moving objects are not present, wherein the trajectory from the first frame is masked to regenerate a masked portion of the second frame. The method may comprise generating the stitched image by stitching the first frame with the masked portion of the second frame.

According to an embodiment of the present disclosure, an electronic device for generating a stitched image is disclosed. The electronic device may comprise a memory; and at least one processor coupled to the memory. The at least one processor may be configured to obtain an input stream including a plurality of frames through an image capturing device. The at least one processor may be configured to identify one or more moving objects and one or more timestamps associated with movement of the one or more moving objects from a first frame and a second frame selected among the plurality of frames. The at least one processor may be configured to determine a plurality of attributes associated with the one or more moving objects from at least one overlapping region of the first frame and the second frame. The at least one processor may be configured to normalize the determined plurality of attributes with respect to a plurality of device attributes associated with the image capturing device. The at least one processor may be configured to determine a trajectory, associated with the one or more moving objects and a moving region of the one or more moving objects in the first frame and the second frame based on the normalized plurality of attributes. The at least one processor may be configured to perform one of stitching the first frame at a first location of the at least one overlapping region where the one or more moving objects are present, wherein the trajectory from the first frame is masked to regenerate a masked portion of the second frame, and stitching the first frame at a second location of the at least one overlapping region where the one or more moving objects are not present, wherein the trajectory from the first frame is masked to regenerate a masked portion of the second frame. The at least one processor may be configured to generate the stitched image by stitching the first frame with the masked portion of the second frame.

According to an embodiment of the present disclosure, a non-transitory computer readable storage medium storing instructions is disclosed. The instructions, when executed by at least one processor of an electronic device, cause the electronic device to execute operations. The operations may comprise obtaining an input stream including a plurality of frames through an image capturing device. The operations may comprise identifying one or more moving objects and one or more timestamps associated with movement of the one or more moving objects from a first frame and a second frame selected among the plurality of frames. The operations may comprise determining a plurality of attributes associated with the one or more moving objects from at least one overlapping region of the first frame and the second frame. The operations may comprise normalizing the determined plurality of attributes with respect to a plurality of device attributes associated with the image capturing device. The operations may comprise determining a trajectory, associated with the one or more moving objects and a moving region of the one or more moving objects in the first frame and the second frame based on the normalized plurality of attributes. The operations may comprise performing one of stitching the first frame at a first location of the at least one overlapping region where the one or more moving objects are present, wherein the trajectory from the first frame is masked to regenerate a masked portion of the second frame, and stitching the first frame at a second location of the at least one overlapping region where the one or more moving objects are not present, wherein the trajectory from the first frame is masked to regenerate a masked portion of the second frame. The operations may comprise generating the stitched image by stitching the first frame with the masked portion of the second frame.

These aspects and advantages will be more clearly understood from the following detailed description taken in conjunction with the accompanying drawings and claims.

### Brief Description of Drawings

Fig. 1 illustrates a block diagram depicting a method for generating a stitched image by stitching frames of an image comprising one or more moving objects, in accordance with an embodiment of the present subject matter;
Fig. 2 illustrates a schematic block diagram of a system configured to generate a stitched image by stitching frames of an image comprising one or more moving objects, in accordance with an embodiment of the present subject matter;
Fig. 3 illustrates an operational flow diagram depicting a process for generating a stitched image by stitching frames of an image comprising one or more moving objects, in accordance with an embodiment of the present subject matter;
Fig. 4 illustrates an architectural diagram depicting a method for generating a stitched image by stitching frames of an image comprising one or more moving objects, in accordance with an embodiment of the present subject matter;
Fig. 5a illustrates a diagram depicting a method for selecting a first frame and a second frame from a number of frames, in accordance with an embodiment of the present subject matter;
Fig. 5b illustrates an operational flow diagram depicting a process for selecting the first frame and the second frame from the number of frames, in accordance with an embodiment of the present subject matter; and
Fig. 5c illustrates a diagram depicting a first stage and a second stage for selecting the first frame and the second frame, in accordance with an embodiment of the present subject matter
Fig. 6 illustrates an operational flow diagram depicting a process for identifying one or more moving objects in a plurality of frames, in accordance with an embodiment of the present subject matter;
Fig. 7 illustrates an operational flow diagram depicting a process for determining a plurality of attributes of one or more moving objects, in accordance with an embodiment of the present subject matter;
Fig. 8 illustrates an operational flow diagram depicting a process for tracing a path of one or more moving objects, in accordance with an embodiment of the present subject matter; and
Fig. 9 illustrates a diagram depicting a trajectory generation, in accordance with an embodiment of the present subject matter;

Further, skilled artisans will appreciate that elements in the drawings are illustrated for simplicity and may not have been necessarily drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### Mode for the Invention

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates and which is defined by the scope of the appended claims.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skilled in the art to which this invention belongs. The system, methods, and examples provided herein are illustrative only and not intended to be limiting.

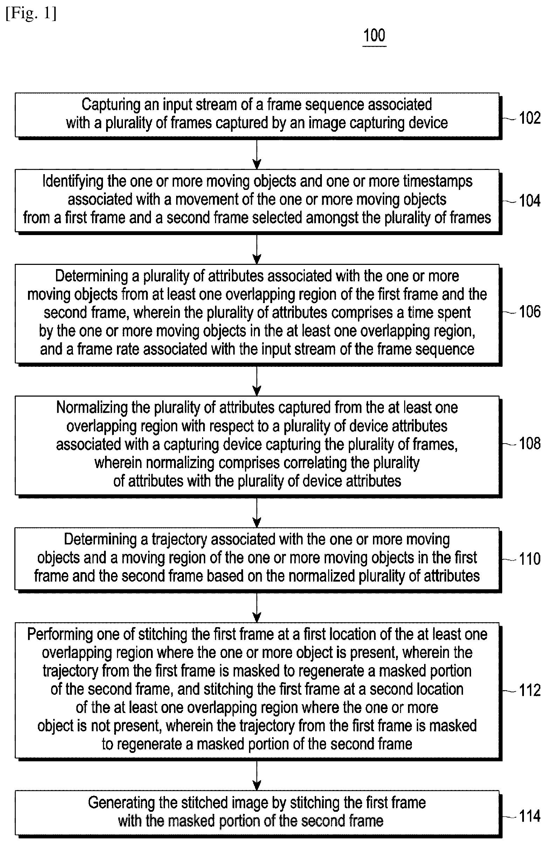

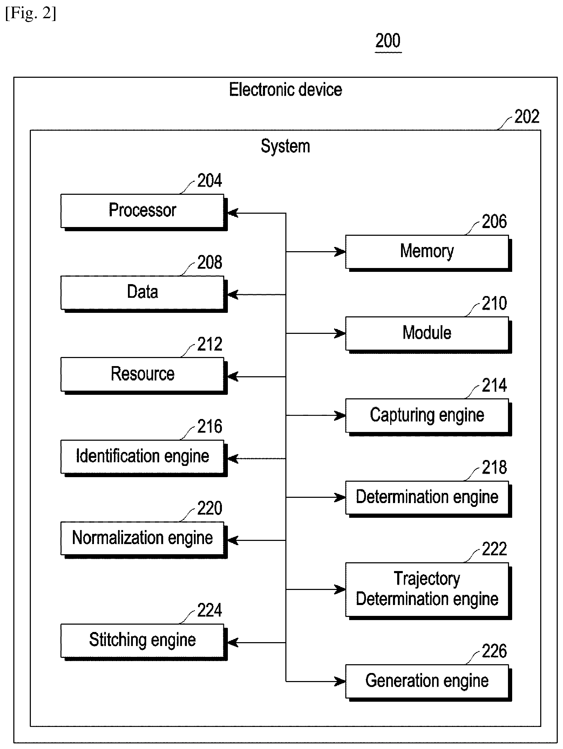

For the sake of clarity, the first digit of a reference numeral of each component of the present disclosure is indicative of the Figure number, in which the corresponding component is shown. For example, reference numerals starting with digit "1" are shown at least in Figure 1. Similarly, reference numerals starting with digit "2" are shown at least in Figure 2, and so on and so forth.

Embodiments of the present subject matter are described below in detail with reference to the accompanying drawings.

Fig. 1 illustrates a block diagram depicting a method 100 for generating a stitched image by stitching frames of an image comprising one or more moving objects, in accordance with an embodiment of the present subject matter. The method 100 may be implemented in an electronic device. Examples of the electronic device may include, but are not limited to, a smartphone, a laptop, a Personal Computer (PC), and a tablet. The image and the stitched image may be in a panorama mode.

At block 102, the method 100 includes capturing an input stream of a frame sequence associated with a plurality of frames by an image capturing device.

At block 104, the method 100 includes identifying the one or more moving objects and one or more timestamps associated with a movement of the one or more moving objects from a first frame and a second frame selected amongst the plurality of frames.

At block 106, the method 100 includes determining a plurality of attributes associated with the one or more moving objects from at least one overlapping region of the first frame and the second frame, wherein the plurality of attributes comprises a time spent by the one or more moving objects in the at least one overlapping region, and a frame rate associated with the input stream of the frame sequence.

At block 108, the method 100 includes normalizing the plurality of attributes captured from the at least one overlapping region with respect to a plurality of device attributes associated with a capturing device capturing the plurality of frames, wherein normalizing comprises correlating the plurality of attributes with the plurality of device attributes.

At block 110, the method 100 includes determining a trajectory, associated with the one or more moving objects and a moving region of the one or more moving objects in the first frame and the second frame based on the normalized plurality of attributes.

At block 112, the method 100 includes performing one of stitching the first frame at a first location of the at least one overlapping region where the one or more object is present, wherein the trajectory from the first frame is masked to regenerate a masked portion of the second frame, and stitching the first frame at a second location of the at least one overlapping region where the one or more object is not present, wherein the trajectory from the first frame is masked to regenerate a masked portion of the second frame.

At block 114, the method 100 includes generating the stitched image by stitching the first frame with the masked portion of the second frame.

Fig. 2 illustrates a schematic block diagram 200 of a system 202 configured to generate a stitched image by stitching frames of an image comprising one or more moving objects, in accordance with an embodiment of the present subject matter. The method 100 may be implemented in an electronic device. Examples of the electronic device may include, but are not limited to, a smartphone, a laptop, a Personal Computer (PC), and a tablet. The image and the stitched image may be in a panorama mode.

In one example embodiment, the system 202 can be a chip incorporated in the electronic device. In another example embodiment, the system 202 may be an implemented software, a logic-based program, a hardware, a configurable hardware, and the like. The system 202 includes a processor 204, a memory 206, data 208, module(s) 210, resources(s) 212, a capturing engine 214, an identification engine 216, a determination engine 218, a normalization engine 220, a trajectory determination engine 222, a stitching engine 224, and a generation engine 226.

The processor 204, the memory 206, the data 208, the module(s) 210, the resources(s) 212, the capturing engine 214, the identification engine 216, the determination engine 218, the normalization engine 220, the trajectory determination engine 222, the stitching engine 224, and the generation engine 226 may be communicatively coupled to one another.

In an example, the processor 204 may be a single processing unit or a number of units, all of which could include multiple computing units. The processor 204 may be implemented as one or more microprocessors, microcomputers, microcontrollers, digital signal processors, central processing units, processor cores, multi-core processors, multiprocessors, state machines, logic circuitries, application-specific integrated circuits, field-programmable gate arrays and/or any devices that manipulate signals based on operational instructions. Among other capabilities, the processor 204 may be configured to fetch and/or execute computer-readable instructions and/or data stored in the memory 206.

In an example, the memory 206 may include any non-transitory computer-readable medium known in the art including, for example, volatile memory, such as static random-access memory (SRAM) and/or dynamic random-access memory (DRAM), and/or non-volatile memory, such as read-only memory (ROM), erasable programmable ROM (EPROM), flash memory, hard disks, optical disks, and/or magnetic tapes. The memory 206 may include the data 208. The memory 206 may store instructions. When the instructions are executed by the processor 204, the instructions may cause the electronic device 200 or the processor to execute operations described herein.

The data 208 serves, amongst other things, as a repository for storing data processed, received, and generated by one or more of the processor 204, the module(s) 210, the resources(s) 212, the capturing engine 214, the identification engine 216, the determination engine 218, the normalization engine 220, the trajectory determination engine 222, the stitching engine 224, and the generation engine 226.

The module(s) 210, amongst other things, may include routines, programs, objects, components, data structures, etc., which perform particular tasks or implement data types. The module(s) 210 may also be implemented as, signal processor(s), state machine(s), logic circuitries, and/or any other device or component that manipulate signals based on operational instructions.

Further, the module(s) 210 may be implemented in hardware, instructions executed by at least one processing unit, for e.g., processor 204, or by a combination thereof. The processing unit may be a general-purpose processor which executes instructions to cause the general-purpose processor to perform operations or, the processing unit may be dedicated to performing the required functions. In another aspect of the present disclosure, the module(s) 210 may be machine-readable instructions (software) which, when executed by a processor/processing unit, may perform any of the described functionalities.

In some example embodiments, the module(s) 210 may be machine-readable instructions (software) which, when executed by a processor/processing unit, perform any of the described functionalities.

The resource(s) 212 may be physical and/or virtual components of the system 202 that provide inherent capabilities and/or contribute towards the performance of the system 202. Examples of the resource(s) 212 may include, but are not limited to, a memory (e.g., the memory 206), a power unit (example, a battery), a display unit, etc. The resource(s) 212 may include a power unit/battery unit, a network unit, etc., in addition to the processor 204, and the memory 206.

Continuing with the above embodiment, the capturing engine 214 may be configured to capture an input stream of a frame sequence. The frame sequence may be related to a number of frames captured by an image capturing device. Examples of the image capturing device may include, but are not limited to, a camera, smartphone, a video recorder, and a CCTV.

Moving forward, the identification engine 216 may be configured to identify the one or more moving objects and one or more timestamps associated with a movement of the one or more moving objects. The one or more moving objects and the one or more timestamps may be identified from a first frame and a second frame selected amongst the number of frames. For identifying the one or more moving objects, the identification engine 216 may be configured to compare a number of second frame grids of the second frame with a number of first frame grids of the first frame in terms of a pixel intensity. The pixel intensity is associated with the number of second frame grids and the number of first frame grids.

The identification engine 216 may be configured to determine that the pixel intensity associated with the number of second frame grids is not matching with the pixel intensity associated with the number of first frame grids. The identification engine 216 may also be configured to identify the one or more moving objects in the first frame and second frame based on the determination. Further, the first frame may be a previous frame with respect to a current frame and the second frame may be the current frame. For selecting the first frame and the second frame, the identification engine 216 may be configured to perform a timestamp-based comparison of the number of frames with respect to a quality metric of each frame.

Furthermore, each frame may be buffered with a timestamp associated with each of the number of frames. Further, the identification engine 216 may be configured to estimate a quality of each of the number of frames based on the timestamp-based comparison of the quality metric of each frame. The quality metric may be derived from a Power Spectral Density (PSD) of each frame. Also, the identification engine 216 may be configured to select the first frame and the second frame amongst the number of frames based on the estimation.

To that understanding, for estimating the quality of each frame, the identification engine 216 may be configured to process the number of frames by applying a number of Machine Learning (ML) techniques. The identification engine 216 may be configured to calculate the PSD associated with each of the processed number of frames. The identification engine 216 may be configured to select at least two frames amongst the number of frames with the PSD greater than a predetermined threshold based on a density-based clustering and an outlier elimination. The at least two frames may include the first frame and the second frame.

Continuing with the above embodiment, the determination engine 218 may be configured to determine a number of attributes associated with the one or more moving objects from at least one overlapping region of the first frame and the second frame. The number of attributes may include a time spent by the one or more moving objects in the at least one overlapping region, and a frame rate associated with the input stream of the frame sequence.

To that understanding, the normalization engine 220 may be configured to normalize the number of attributes captured from the at least one overlapping region. Examples of the number of attributes may include, but are not limited to, one or more of a relative motion of the one or more moving objects, a ratio of swapping area of the one or more moving objects, a color of the one or more moving objects, a background color, a size of the one or more moving objects, a frame rate, a velocity of the one or more moving objects, and a time spent by the one or more moving objects in first frame. The normalization may be performed with respect to a number of device attributes associated with a capturing device capturing the number of frames. Examples of the number of device attributes may include, but are not limited to, one or more of a speed of the image capturing device, and a direction of a movement of the image capturing device. The normalization may include correlating the number of attributes with the number of device attributes. Further, correlating the number of attributes with the number of device attributes may include changing a value of one or more attributes amongst the number of attributes with respect to a value of the number of device attributes.

Moving forward, the trajectory determination engine 222 may be configured to determine a trajectory associated with the one or more moving objects and a moving region of the one or more moving objects in the first frame and the second frame based on the normalized number of attributes. For determining the trajectory, the trajectory determination engine 222 may be configured to determine that the number of attributes upon being normalized move the one or more moving objects. The trajectory determination engine 222 may be configured to detect a direction of motion of the one or more moving objects in the first frame and the second frame. The trajectory determination engine 222 may be configured to generate the trajectory based on a down sampling and up sampling of the number of attributes.

Accordingly, the stitching engine 224 may be configured to perform one of a number of stitching techniques. The number of stitching techniques may include stitching the first frame at a first location of the at least one overlapping region where the one or more object is present. The trajectory from the first frame is masked to regenerate a masked portion of the second frame. The number of stitching techniques may also include stitching the first frame at a second location of the at least one overlapping region where the one or more object is not present. The trajectory from the first frame may be masked to regenerate a masked portion of the second frame.

Furthermore, the generation engine 226 may be configured to generate the stitched image by stitching the first frame with the masked portion of the second frame.

The functions of the engines including the capturing engine 214, the identification engine 216, the determination engine 218, the normalization engine 220, the trajectory determination engine 222, the stitching engine 224, and the generation engine may be executed by the processor 204, in conjunction with the instructions which are for being executed by the processor and stored in the memory 206.

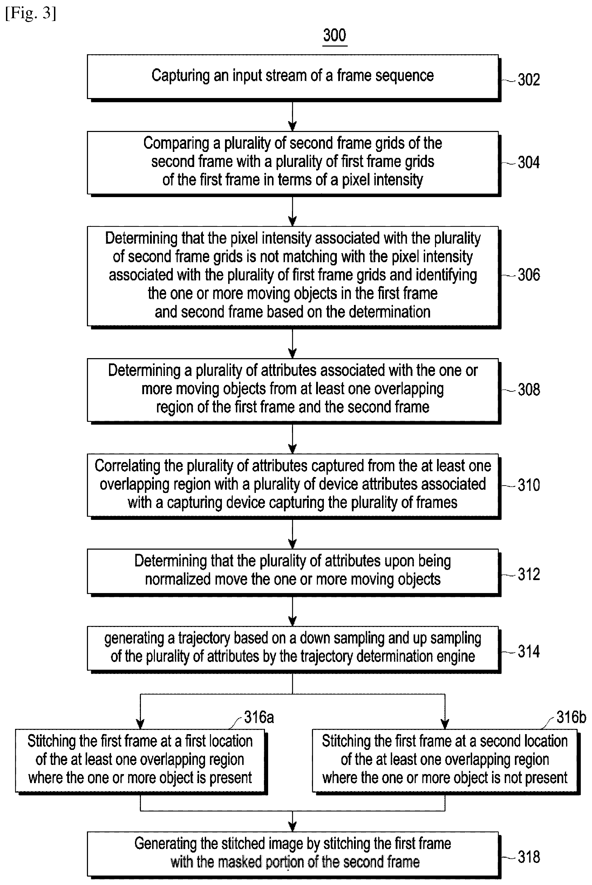

Fig. 3 illustrates an operational flow diagram depicting a process 300 for generating a stitched image by stitching frames of an image comprising one or more moving objects, in accordance with an embodiment of the present subject matter. The process may be performed by the system 202 incorporated in an electronic device of the user. Generating the stitched image may be based on applying one or more ML techniques. Examples of the one or more moving objects may include, but are not limited to, a human, an animal, and a vehicle.

At step 302, the process 300 may include capturing an input stream of a frame sequence. The frame sequence may be related to a number of frames captured by an image capturing device. The input stream may be captured by the image capturing engine 214 as referred in the fig. 2. Further, the number of frames may be in panoramic view.

At step 304, the process 300 may include comparing a number of second frame grids of the second frame with a number of first frame grids of the first frame in terms of a pixel intensity. The pixel intensity is associated with the number of second frame grids and the number of first frame grids. The comparison may be performed for identifying the one or more moving objects and one or more timestamps associated with a movement of the one or more moving objects. The identification may be performed by the identification engine 216 as referred in the fig. 2. The one or more moving objects and the one or more timestamps may be identified from a first frame and a second frame selected amongst the number of frames.

At step 306, the process 300 may include determining that the pixel intensity associated with the number of second frame grids is not matching with the pixel intensity associated with the number of first frame grids and identifying the one or more moving objects in the first frame and second frame based on the determination. Further, the first frame may be a previous frame with respect to a current frame and the second frame may be the current frame.

For a selection of the first frame and the second frame, the process 300 may include performing a timestamp-based comparison of the number of frames with respect to a quality metric of each frame. Furthermore, each frame may be buffered with a timestamp associated with each of the number of frames. The process 300 may further include estimating a quality of each of the number of frames based on the timestamp-based comparison of the quality metric of each frame. The quality metric may be derived from a PSD of each frame and the first frame and the second frame may be selected amongst the number of frames based on the estimation.

To that understanding, for estimating the quality of each frame, the process 300 may include processing the number of frames by applying a number of Machine Learning (ML) techniques and calculating the PSD associated with each of the processed number of frames. The process 300 may also include selecting at least two frames amongst the number of frames with the PSD greater than a predetermined threshold based on a density-based clustering and an outlier elimination. The at least two frames may include the first frame and the second frame.

At step 308, the process 300 may include determining a number of attributes associated with the one or more moving objects from at least one overlapping region of the first frame and the second frame. The determination may be performed by the determination engine 218 as referred in the fig. 2.

At step 310, the process 300 may include correlating the number of attributes captured from the at least one overlapping region with a number of device attributes associated with a capturing device capturing the number of frames. The correlation may include changing a value of one or more attributes amongst the number of attributes with respect to a value of the number of device attributes. The correlation may be performed for normalizing the number of attributes by the normalizing engine as referred in the fig. 2.

Examples of the number of attributes may include, but are not limited to, one or more of a relative motion of the one or more moving objects, a ratio of swapping area of the one or more moving objects, a color of the one or more moving objects, a background color, a size of the one or more moving objects, a frame rate, a velocity of the one or more moving objects, and a time spent by the one or more moving objects in first frame. Examples of the number of device attributes may include, but are not limited to, one or more of a speed of the image capturing device, and a direction of a movement of the image capturing device. The normalization may include correlating the number of attributes with the number of device attributes. Further,

At step 312, the process 300 may include determining that the number of attributes upon being normalized move the one or more moving objects. The process 300 may further include detecting a direction of motion of the one or more moving objects in the first frame and the second frame. The step 312 may be performed by the trajectory determination engine 222 as referred in the fig. 2.

At step 314, the process 300 may include generating a trajectory based on a down sampling and up sampling of the number of attributes by the trajectory determination engine 222. The trajectory may be determined for the one or more moving objects and a moving region of the one or more moving objects in the first frame and the second frame based on the normalized number of attributes.

At step 316a, the process 300 may include stitching the first frame at a first location of the at least one overlapping region where the one or more object is present. The trajectory from the first frame is masked to regenerate a masked portion of the second frame. The step 316a may be performed by the stitching engine 224 as referred in the fig. 2.

At step 316b, the process 300 may include stitching the first frame at a second location of the at least one overlapping region where the one or more object is not present. The trajectory from the first frame may be masked to regenerate a masked portion of the second frame. The step 316b may be performed by the stitching engine 224 as referred in the fig. 2.

At step 318, the process 300 may include generating the stitched image by stitching the first frame with the masked portion of the second frame by the generation engine 226 as referred in the fig. 2.

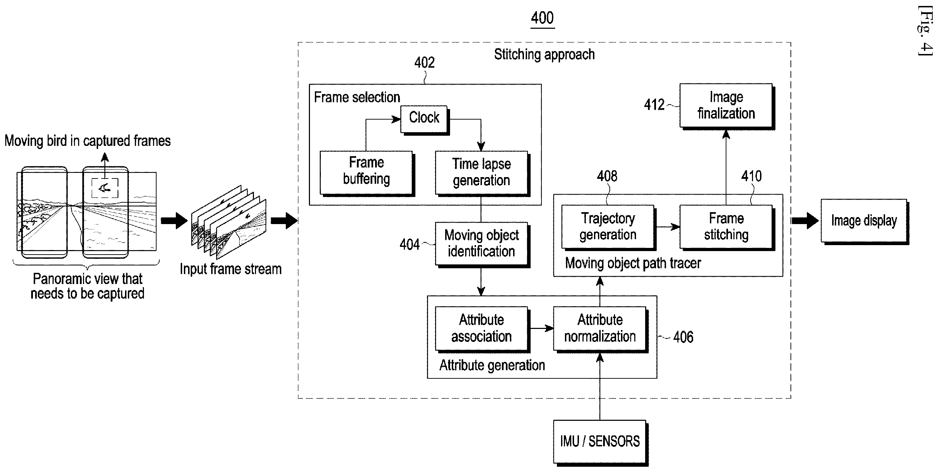

Fig. 4 illustrates an architectural diagram depicting a method 400 for generating a stitched image by stitching frames of an image comprising one or more moving objects, in accordance with an embodiment of the present subject matter. The method 400 may be performed by the system 202 incorporated in an electronic device.

At step 402, the method 400 includes performing frame selection. A first frame and a second frame may be selected from an input stream of a frame sequence associated with a number of frames captured by an image capturing device. Examples of the image capturing device may include, but are not limited to, a camera, a video recorder, and a CCTV. In an embodiment, the number of frames may be buffered to compare a new frame with a previous frame. The first frame may be the previous frame with respect to the current frame and the second frame may be the current frame.

At step 404, the method 400 may include identifying one or more moving objects from the first frame and the second frame and associated various time stamp for object movement within the first frame and the second frame. The identification may be performed based on comparing a number of second frame grids of the second frame with a number of first frame grids of the first frame in terms of a pixel intensity.

At step 406, the method 400 may include determining a number of attributes associated with the one or more moving objects from at least one overlapping region of the first frame and the second frame. The determination may be performed by the determination engine 218 as referred in the fig. 2 via one or more sensors such as a motion sensor, and an IMU sensor. Further, the number of attributes captured from the at least one overlapping region may be correlated with a number of device attributes associated with a capturing device capturing the number of frames. The correlation may include changing a value of one or more attributes amongst the number of attributes with respect to a value of the number of device attributes. The correlation may be performed for normalizing the number of attributes by the normalizing engine as referred in the fig. 2. The normalization may include correlating the number of attributes with the number of device attributes.

At step 408, the method 400 may include generating a trajectory based on a down sampling and up sampling of the number of attributes by the trajectory determination engine 222. The trajectory may be determined for the one or more moving objects and a moving region of the one or more moving objects in the first frame and the second frame based on the normalized number of attributes.

At step 410, the method 400 may include performing one of a number of stitching techniques. The number of stitching techniques may include stitching the first frame at a first location of the at least one overlapping region where the one or more object is present. The trajectory from the first frame is masked to regenerate a masked portion of the second frame. The number of stitching techniques may further include stitching the first frame at a second location of the at least one overlapping region where the one or more object is not present. The trajectory from the first frame may be masked to regenerate a masked portion of the second frame.

At step 412, the method 400 may include finalizing the stitched image by stitching the first frame with the masked portion of the second frame by the generation engine 226 as referred in the fig. 2.

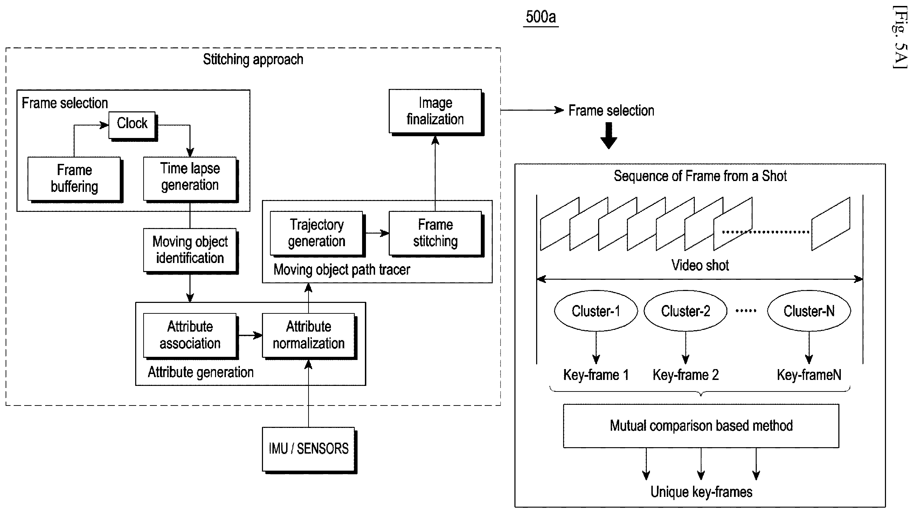

Fig. 5a illustrates a diagram depicting a method 500a for selecting a first frame and a second frame from a number of frames, in accordance with an embodiment of the present subject matter. The method 500a may be performed by the capturing engine 214 as referred in the fig. 2. An individual quality metric of each frame from the number of frames may be determined for estimating a quality of each frame. Further, one or more distorted frames may be removed form the number of frames. Moving forward, remaining frames from the number of frames may be buffered with a time stamp for a time-based comparison of the remaining frames. Equation 1 mentioned below depicts the buffering.$Fn = \left(1-r\right) {F}_{n} {+ rF}_{0}$
Fₙ is the new frame
Fₙ is the old frame
r is the regulator value which regulates the rate at which foreground objects are deleted from background
An 'N' number of frames may be clustered into M clusters, such as, σ1, σ2,....,σM. The salient content of any object or a frame may be visual content of that object or a frame which could be color, texture or shape of the object or a frame. The similarity between two frames is determined by computing the similarity of the visual content.

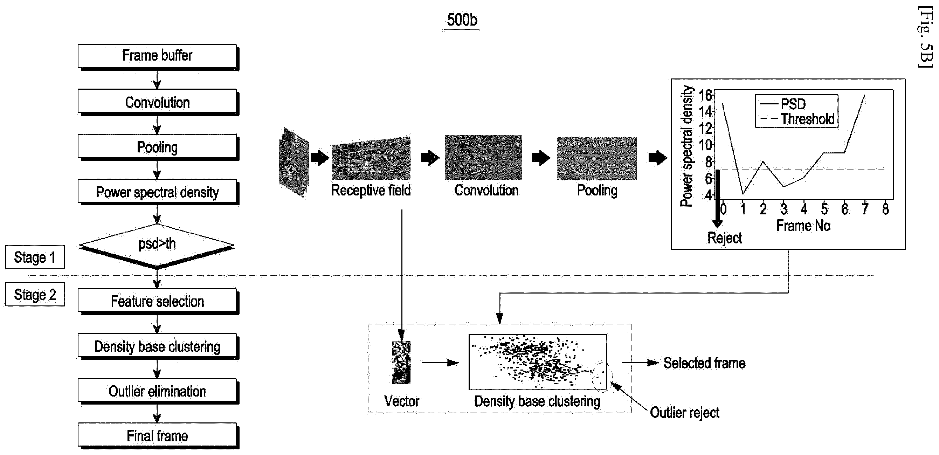

Fig. 5b illustrates an operational flow diagram depicting a process 500b for selecting the first frame and the second frame from the number of frames, in accordance with an embodiment of the present subject matter.

The process 500b includes performing a frame buffer as disclosed in the fig. 5a and proceeding to performing pooling and convolution on the number of frames. Based on the performing the frame buffer, the pooling, and the convolution, a quality of each of the number of frames may be estimated. The pooling may be performed to reduce a number of parameters to learn, and an amount of computation performed in a network. The convolution may be an element wise matrix multiplication of kernel(filter) with an image pixel. The quality metric may be derived from a Power Spectral Density (PSD) of each frame. Further, one or more frames may be selected and based on a determination that the PSD associated with the one or more frames is greater than a predetermined threshold. Upon selection of the one or more frame, a density base clustering may be performed for an outlier detection and elimination. Based on that, the first frame and the second frame may be selected.

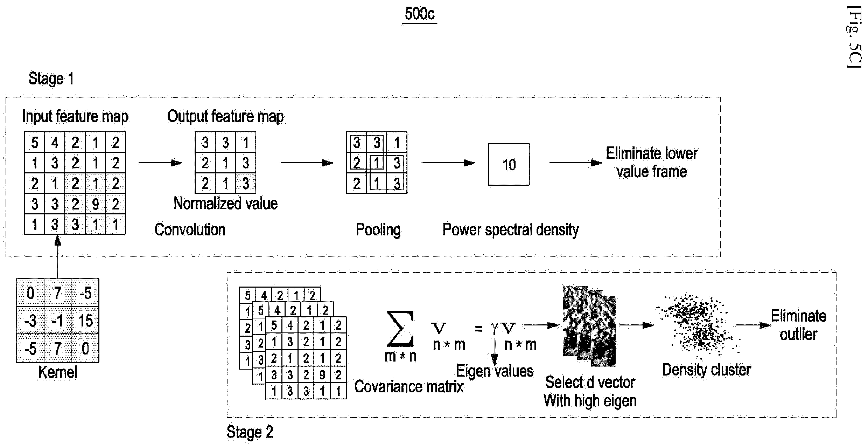

Fig. 5c illustrates a diagram 500c depicting a first stage and a second stage for selecting the first frame and the second frame, in accordance with an embodiment of the present subject matter. The first stage may include performing the poling, the convolution, determining the PSD and eliminating lower value frames from the number of frames. Further, the second stage may include performing the density base clustering for the outlier detection and elimination. Based on that, the first frame and the second frame may be selected.

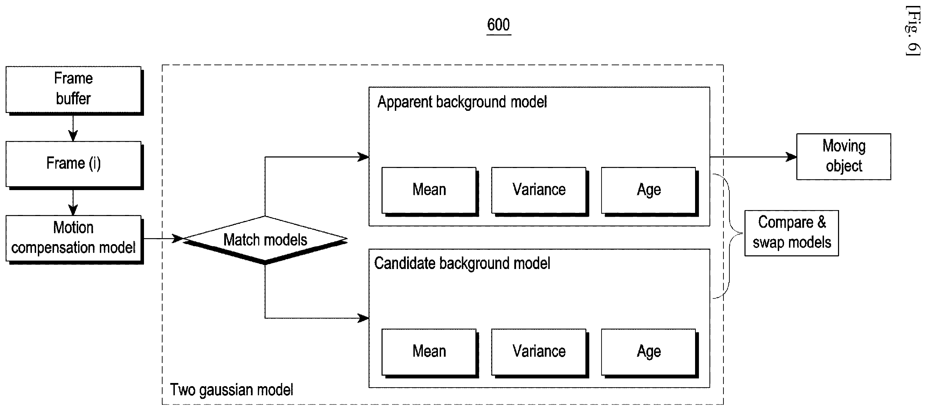

Fig. 6 illustrates an operational flow diagram depicting a process 600 for identifying one or more moving objects in a number of frames, in accordance with an embodiment of the present subject matter. The one or more moving objects may be identified from a first frame and a second frame amongst the number of frames. The process 600 may be performed by the identification engine 216 as referred in the fig. 2.

The model learned until time t-1 cannot be used directly for detection in time t. To use the model, motion compensation is required. A compensated background model for motion compensation at time t by merging the statistics of the model at time t-1 may be constructed. A single gaussian model with age may use a gaussian distribution to keep track of the change of the moving background.

If the age of a candidate background model becomes larger than an apparent background model, the models may be swapped and correct background models may be used. The candidate background model may remain ineffective until the age becomes older than the apparent background model, when, at that time, the two models may be swapped.

If in a new frame, pixel intensities in a specific grid are not matching with a corresponding grid in previous frames, it may be concluded that there is a moving object in the grid. Parameters with tilde may refer to the parameter values of the corresponding grid in the previous frames. Due to motion, background may be changing so the grid may be matched in different frames. The identification of the one or more frames may be depicted in equation 2 mentioned below:
${μ}_{i}^{\left(t\right)} = \frac{{{{a}^{˜}}_{i}}^{\left(t-1\right)}}{{{{a}^{˜}}_{i}}^{\left(t-1\right)} + 1} {{{μ}^{˜}}_{i}}^{\left(t-1\right)} + \frac{1}{{{{a}^{˜}}_{i}}^{\left(t-1\right)} + 1} {M}_{i}^{\left(t\right)}$ ${σ}_{i}^{\left(t\right)} = \frac{{{{a}^{˜}}_{i}}^{\left(t-1\right)}}{{{{a}^{˜}}_{i}}^{\left(t-1\right)} + 1} {{{σ}^{˜}}_{i}}^{\left(t-1\right)} + \frac{1}{{{{a}^{˜}}_{i}}^{\left(t-1\right)} + 1} {V}_{i}^{\left(t\right)}$ ${α}_{i}^{\left(t\right)} = \left|{{{α}^{˜}}_{i}}^{\left(t-1\right)}+1\right.$

Where M and V are the mean and variance of all pixels in grid i, i is the age of the grid i, referring to the number of consecutive frames this grid is shown.

Motion Compensation may be used to match grids in consecutive frames as the background may be moving in different frames.

For all grids G(3224) in time stamp t, the process 600 may include first performing the Kanade-Lucas-Tomasi Feature Tracker(KLT) on corners of each grid G(t) I to extract features of the points, further RANSAC[2] may be performed to generate transformation matrix *H*_{(*t,t*-1)} frame at t to t - 1.

For each grid ${G}_{i}^{t}$ the process 600 may include finding the matching grid ${G}_{i}^{\left(t-1\right)}$ by *H*_{(*t,t*-1)} by and applies a weighted summation for grids in frame t - 1 that ${G}_{i}^{\left(t-1\right)}$ i covers to generate the parameter values of ${G}_{i}^{\left(t-1\right)}$.${G}_{i}^{\left(t-1\right)} = SGM \left({{{μ}^{˜}}_{i}}^{\left(t-1\right)}, {{{σ}^{˜}}_{i}}^{\left(t-1\right)}, {{{α}^{˜}}_{i}}^{\left(t-1\right)}\right)$

For each grid we keep track of two SGM B and F and each time we only update one model. We start from updating B (assume it as the background model), until
${\left({M}_{i}^{\left(t\right)}-{μ}_{B , i}^{\left(t\right)}\right)}^{2} > = {θ}_{s} {σ}_{B , i}^{\left(t\right)}$

Where s is a threshold parameter. Then we update F, similarly until
${\left({M}_{i}^{\left(t\right)}-{μ}_{F , i}^{\left(t\right)}\right)}^{2} > = {θ}_{s} {σ}_{F , i}^{\left(t\right)}$

Further, the model may be swapped for recording foreground and background model if the number of consecutive updates of F is larger than that of B, that is
${α}_{F , i}^{\left(t\right)} > {α}_{B , i}^{\left(t\right)}$

Swapping may be performed if the "foreground"stay longer in frames than "background" than the foreground is probably the real background. M and V may be the mean and variance of all pixels in grid i, *αᵢ* age of the grid i.

Further, the model swapping may include a SGM (Single Gaussian Model) that may be configured to keeps track of change of moving background, if in a new frame pixel intensity in a grid are different comparing corresponding grid in previous frame then it has a moving object. Two SGMs may be used to record the grid related to background and foreground (moving objects) separately such that the pixel intensities in foreground may not contaminate the parameter values in the background Gaussian model.

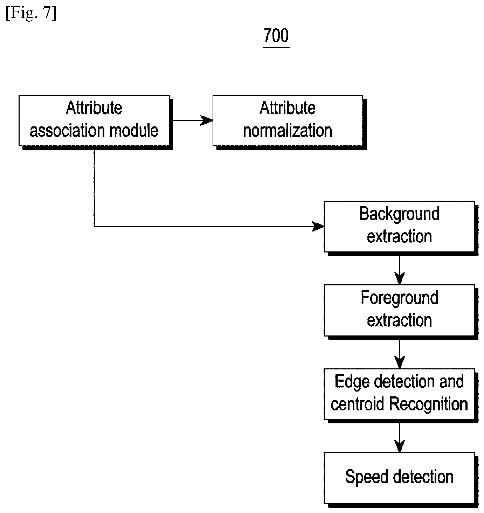

Fig. 7 illustrates an operational flow diagram depicting a process 700 for determining a number of attributes of one or more moving objects, in accordance with an embodiment of the present subject matter. The one or more moving objects may be present in a number of frames. Examples of the number attributes may be include, but are not limited to, one or more of a relative motion of the one or more moving objects, a ratio of swapping area of the one or more moving objects, a color of the one or more moving objects, a background color, a size of the one or more moving objects, a frame rate, a velocity of the one or more moving objects, and a time spent by the one or more moving objects in the first frame. The number of attributes may be determined based on a background extraction, a foreground extraction, and edge detection and centroid recognition, and a speed detection.

The background extraction, the foreground extraction, and the speed detection may be performed based on the equations 3, 4, and 5, as mentioned below. After foreground extraction, the collected images may be transferred to binary image as the operations such as edge detection, noise and dilation removal and object labeling are suitable in binary platform. The speed of the moving object in each frame is calculated using the position of the vehicle in each frame If pixel has the coordinate. i = (a,b) i -1= (e, f ), where the centroids location is showed in frame i and i-1 for object, with (a, b) coordinate and (e, f) coordinate.${k}_{xy} \left({t}_{n}\right) = \frac{{\sum }_{m = 0}^{j - 1} {f}_{xy} \left({t}_{n - m}\right)}{j}$ Where:
n is frame number
F_{xy}(tₙ) is the pixel value of (x,y) in n'th frame;
k_{xy}(tₙ ) is the pixel mean value of (x,y) in n'th frame averaged over the previous j frames, and j is the number of the frames used to calculate the average of the pixels value.
${N}_{xy} \left({t}_{n}\right) = \left\{\begin{matrix}1 & Foreground \left|{f}_{xy}\left({t}_{n}\right)-{f}_{xy}\left({t}_{n - 1}\right)\right| & > T \\ 0 & Background \left|{f}_{xy}\left({t}_{n}\right)-{f}_{xy}\left({t}_{n - 1}\right)\right| & < T\end{matrix}\right.$

Where Nxy (tn) is the value of the foreground or background of the picture at pixel (x, y) in n'th frame

T is the threshold used to distinguish between the foreground and background.${d}_{t} = \sqrt{{\left(a-e\right)}^{2} + {\left(b-f\right)}^{2}} V = K \frac{Δ x}{Δ t}$

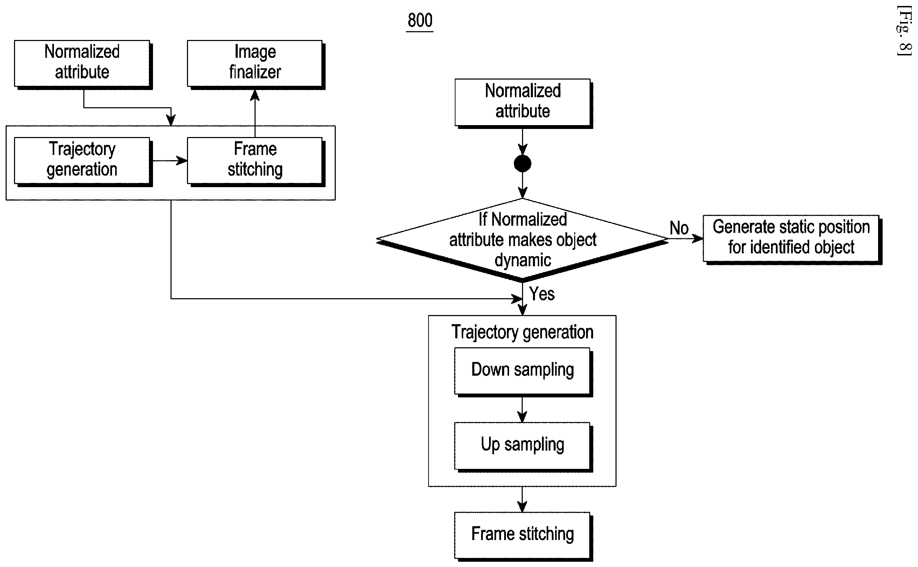

K is the calibration coefficient
Fig. 8 illustrates an operational flow diagram depicting a process 800 for tracing a path of one or more moving objects, in accordance with an embodiment of the present subject matter. The process 800 may include determining whether normalized attributes of the one or more moving objects make the one or more moving objects dynamic. In an embodiment, where it is determined that the one or more moving objects are not dynamic, a static position for identified object may be generated. In another embodiment, where it is determined that the one or more moving objects are dynamic, the process 800 may include performing a trajectory generation and a frame stitching. The path tracing may be depicted in eq. 6 mentioned below. For each pixel move ( u ,v ) constant within in small neighborhood w
$Δ d \to small$ Point (i,j) ∈ w : ${I}_{x} \left(i, j\right) u + {I}_{y} \left(i, j\right) v + {I}_{t} \left(i, j\right) = 0$

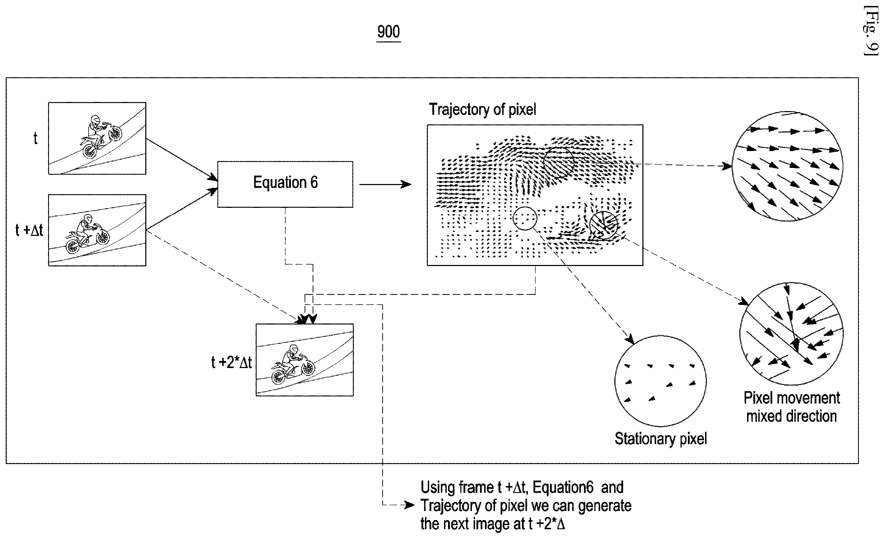

Fig. 9 illustrates a diagram 900 depicting a trajectory generation, in accordance with an embodiment of the present subject matter. The trajectory generation may be performed by the trajectory determination engine 222 as referred in the fig. 2. Further, the trajectory generation may include a down sampling, and an up sampling. The down sampling may be utilised to reduce a dimension and get most pure feature-taking high dimensional data and project into low dimension. The up sampling may be utilized to increase the dimension taking low dimensional data and try to reconstruct the original frame. Trajectory generation may utilise the eq. 6 as referred in the fig. 9 to calculate a velocity in y direction and x direction by taking two frames. Using frame t + Δt , eq. 6 and a trajectory of pixel a next image at t +2*Δ may be generated.

While specific language has been used to describe the present disclosure, any limitations arising on account thereto, are not intended. As would be apparent to a person in the art, various working modifications may be made to the method in order to implement the inventive concepts as taught herein. The drawings and the foregoing description give examples of embodiments. Those skilled in the art will appreciate that the described elements may well be combined into a single functional element. Alternatively, certain elements may be split into multiple functional elements. Elements from one embodiment may be added to another embodiment. Clearly, the present disclosure may be otherwise variously embodied, and practiced within the scope of the following claims.

## Claims

1. A method for generating a stitched image by an electronic device (200), the method comprising:
obtaining (102) an input stream including a plurality of frames through an image capturing device;
identifying (104) one or more moving objects and one or more timestamps associated with movement of the one or more moving objects from a first frame and a second frame selected among the plurality of frames;
determining (106) a plurality of attributes associated with the one or more moving objects from at least one overlapping region of the first frame and the second frame;
normalizing (108) the determined plurality of attributes with respect to a plurality of device attributes associated with the image capturing device;
determining (110) a trajectory, associated with the one or more moving objects and a moving region of the one or more moving objects in the first frame and the second frame based on the normalized plurality of attributes;
performing (112) one of:
stitching the first frame at a first location of the at least one overlapping region where the one or more moving objects are present, wherein the trajectory from the first frame is masked to regenerate a masked portion of the second frame, and
stitching the first frame at a second location of the at least one overlapping region where the one or more moving objects are not present, wherein the trajectory from the first frame is masked to regenerate a masked portion of the second frame; and
generating (114) the stitched image by stitching the first frame with the masked portion of the second frame.

2. The method of claim 1, wherein the first frame is a previous frame with respect to a current frame and the second frame is the current frame.

3. The method of claim 1, wherein the plurality of attributes comprises one or more of a relative motion of the one or more moving objects, a ratio of swapping area of the one or more moving objects, a color of the one or more moving objects, a background color, a size of the one or more moving objects, a frame rate, a velocity of the one or more moving objects, and a time spent by the one or more moving objects in first frame and the plurality of device attributes comprises one or more of a speed of the image capturing device, and a direction of a movement of the image capturing device.

4. The method of claim 1, further comprising:
performing a timestamp-based comparison of the plurality of frames with respect to a quality metric of each frame, wherein each of the plurality of frame is buffered with a timestamp associated with a corresponding frame;
estimating a quality of each of the plurality of frames based on the timestamp-based comparison of the quality metric of each frame, wherein the quality metric is derived from a Power Spectral Density, PSD, of each of the plurality of frames; and
selecting the first frame and the second frame among the plurality of frames based on the estimation.

5. The method of claim 4, wherein estimating the quality of each frame comprises:
processing the plurality of frames by applying a plurality of Machine Learning, ML, techniques;
calculating the PSD associated with each of the processed plurality of frames; and
selecting at least two frames among the plurality of frames with the PSD greater than a predetermined threshold based on a density-based clustering and an outlier elimination, wherein the at least two frames comprises the first frame and the second frame.

6. The method of claim 1, wherein identifying the one or more moving objects comprises:
comparing a plurality of second frame grids of the second frame with a plurality of first frame grids of the first frame in terms of a pixel intensity, wherein the pixel intensity is associated with the plurality of second frame grids and the plurality of first frame grids;
determining that the pixel intensity associated with the plurality of second frame grids is not matching with the pixel intensity associated with the plurality of first frame grids; and
identifying the one or more moving objects in the first frame and second frame based on the determination.

7. The method of claim 1, wherein determining the trajectory of the one or more moving objects and the moving region of the one or more moving objects comprises:
determining that the plurality of attributes upon being normalized move the one or more moving objects;
detecting a direction of motion of the one or more moving objects in the first frame and the second frame; and
generating the trajectory based on a down sampling and up sampling of the plurality of attributes.

8. The method of claim 1, wherein normalizing the determined plurality of attributes with respect to the plurality of device attributes comprises correlating the plurality of attributes with the plurality of device attributes.

9. The method of claim 8, wherein correlating the plurality of attributes with the plurality of device attributes comprises changing a value of one or more attributes amongst the plurality of attributes with respect to a value of the plurality of device attributes.

10. An electronic device (200) for generating a stitched image, the electronic device comprising:
memory (206) storing instructions; and
at least one processor (204) coupled to the memory (206), wherein the instructions, when executed by the at least one processor, cause the electronic device (200) to operate according to a method in one of claims 1 to 9.

11. A non-transitory computer readable storage medium storing instructions which, when executed by at least one processor (204) of an electronic device (200), cause the electronic device to execute operations according to a method in one of claims 1 to 9.

## Patentansprüche

1. Verfahren zum Erzeugen eines zusammengefügten Bildes durch ein elektronisches Gerät (200), wobei das Verfahren Folgendes umfasst:
Erhalten (102) eines Eingabestroms, der eine Vielzahl von Rahmen beinhaltet, durch ein Bilderfassungsgerät;
Identifizieren (104) von einem oder mehreren beweglichen Objekten und einem oder mehreren Zeitstempeln assoziiert mit Bewegung des einen oder der mehreren beweglichen Objekte von einem ersten Rahmen und einem zweiten Rahmen ausgewählt unter der Vielzahl von Rahmen;
Bestimmen (106) einer Vielzahl von Attributen assoziiert mit dem einen oder den mehreren beweglichen Objekten aus zumindest einer Überlappungsregion des ersten Rahmens und des zweiten Rahmens;
Normalisieren (108) der bestimmten Vielzahl von Attributen in Bezug auf eine Vielzahl von Gerätattributen assoziiert mit dem Bilderfassungsgerät;
Bestimmen (110) einer Trajektorie assoziiert mit dem einen oder den mehreren beweglichen Objekten und einer beweglichen Region des einen oder der mehreren beweglichen Objekte in dem ersten Rahmen und dem zweiten Rahmen basierend auf der normalisierten Vielzahl von Attributen;
Durchführen (112) von einem von:
Zusammenfügen des ersten Rahmens an einer ersten Stelle der zumindest einen Überlappungsregion, an der das eine oder die mehreren beweglichen Objekte vorhanden sind, wobei die Trajektorie von dem ersten Rahmen maskiert ist, um einen maskierten Abschnitt des zweiten Rahmens zu regenerieren, und
Zusammenfügen des ersten Rahmens an einer zweiten Stelle der zumindest einen Überlappungsregion, an der das eine oder die mehreren beweglichen Objekte nicht vorhanden sind, wobei die Trajektorie von dem ersten Rahmen maskiert ist, um einen maskierten Abschnitt des zweiten Rahmens zu regenerieren; und
Erzeugen (114) des zusammengefügten Bildes durch Zusammenfügen des ersten Rahmens mit dem maskierten Abschnitt des zweiten Rahmens.

2. Verfahren nach Anspruch 1, wobei der erste Rahmen ein vorheriger Rahmen in Bezug auf einen aktuellen Rahmen ist und der zweite Rahmen der aktuelle Rahmen ist.

3. Verfahren nach Anspruch 1, wobei die Vielzahl von Attributen eines oder mehrere von einer relativen Fortbewegung des einen oder der mehreren beweglichen Objekte, einem Verhältnis von Austauschfläche des einen oder der mehreren beweglichen Objekte, einer Farbe des einen oder der mehreren beweglichen Objekte, einer Hintergrundfarbe, einer Größe des einen oder der mehreren beweglichen Objekte, einer Rahmenrate, einem Tempo des einen oder der mehreren beweglichen Objekte und einer Zeit, die durch das eine oder die mehreren beweglichen Objekte in dem ersten Rahmen verbracht wird, umfasst und die Vielzahl von Gerätattributen eines oder mehrere von einer Geschwindigkeit des Bilderfassungsgeräts und einer Richtung einer Bewegung des Bilderfassungsgeräts umfasst.

4. Verfahren nach Anspruch 1, ferner umfassend:
Durchführen eines zeitstempelbasierten Vergleichs der Vielzahl von Rahmen in Bezug auf eine Qualitätsmetrik jedes Rahmens, wobei jeder aus der Vielzahl von Rahmen mit einem Zeitstempel assoziiert mit einem entsprechenden Rahmen gepuffert ist;
Schätzen einer Qualität von jedem aus der Vielzahl von Rahmen basierend auf dem zeitstempelbasierten Vergleich der Qualitätsmetrik jedes Rahmens, wobei die Qualitätsmetrik aus einer Leistungsspektraldichte, PSD, von jedem aus der Vielzahl von Rahmen abgeleitet ist; und
Auswählen des ersten Rahmens und des zweiten Rahmens unter der Vielzahl von Rahmen basierend auf der Schätzung.

5. Verfahren nach Anspruch 4, wobei das Schätzen der Qualität jedes Rahmens Folgendes umfasst:
Verarbeiten der Vielzahl von Rahmen durch Anwenden einer Vielzahl von Techniken des maschinellen Lernens, ML;
Berechnen der PSD assoziiert mit jeder aus der verarbeiteten Vielzahl von Rahmen; und
Auswählen von zumindest zwei Rahmen unter der Vielzahl von Rahmen, wobei die PSD größer als ein vorbestimmter Schwellenwert ist, basierend auf einer dichtebasierten Clusterbildung und einer Ausreißerbeseitigung, wobei die zumindest zwei Rahmen den ersten Rahmen und den zweiten Rahmen umfassen.

6. Verfahren nach Anspruch 1, wobei das Identifizieren des einen oder der mehreren beweglichen Objekte Folgendes umfasst:
Vergleichen einer Vielzahl von zweiten Rahmenrastern des zweiten Rahmens mit einer Vielzahl von ersten Rahmenrastern des ersten Rahmens in Bezug auf eine Pixelintensität, wobei die Pixelintensität mit der Vielzahl von zweiten Rahmenrastern und der Vielzahl von ersten Rahmenrastern assoziiert ist;
Bestimmen, dass die Pixelintensität assoziiert mit der Vielzahl von zweiten Rahmenrastern nicht mit der Pixelintensität assoziiert mit der Vielzahl von ersten Rahmenrastern übereinstimmt; und
Identifizieren des einen oder der mehreren beweglichen Objekte in dem ersten Rahmen und dem zweiten Rahmen basierend auf der Bestimmung.

7. Verfahren nach Anspruch 1, wobei das Bestimmen der Trajektorie des einen oder der mehreren beweglichen Objekte und der beweglichen Region des einen oder der mehreren beweglichen Objekte Folgendes umfasst:
Bestimmen, dass die Vielzahl von Attributen beim Normalisieren das eine oder die mehreren beweglichen Objekte bewegt;
Detektieren einer Fortbewegungsrichtung des einen oder der mehreren beweglichen Objekte in dem ersten Rahmen und dem zweiten Rahmen; und
Erzeugen der Trajektorie basierend auf einem Abwärtsabtasten und Aufwärtsabtasten der Vielzahl von Attributen.

8. Verfahren nach Anspruch 1, wobei das Normalisieren der bestimmten Vielzahl von Attributen in Bezug auf die Vielzahl von Gerätattributen Korrelieren der Vielzahl von Attributen mit der Vielzahl von Gerätattributen umfasst.

9. Verfahren nach Anspruch 8, wobei das Korrelieren der Vielzahl von Attributen mit der Vielzahl von Gerätattributen Ändern eines Wertes von einem oder mehreren Attributen unter der Vielzahl von Attributen in Bezug auf einen Wert der Vielzahl von Gerätattributen umfasst.

10. Elektronisches Gerät (200) zur Erzeugung eines zusammengefügten Bildes, wobei das elektronische Gerät Folgendes umfasst:
Speicher (206), der Anweisungen speichert; und
zumindest einen Prozessor (204), der an den Speicher (206) gekoppelt ist, wobei die Anweisungen, wenn durch den zumindest einen Prozessor ausgeführt, das elektronische Gerät (200) dazu veranlassen, gemäß einem Verfahren nach einem der Ansprüche 1 bis 9 zu arbeiten.

11. Nichtflüchtiges computerlesbares Speichermedium, das Anweisungen speichert, die, wenn durch zumindest einen Prozessor (204) eines elektronischen Geräts (200) ausgeführt, das elektronische Gerät dazu veranlassen, Vorgänge gemäß einem Verfahren nach einem der Ansprüche 1 bis 9 auszuführen.

## Revendications

1. Procédé permettant la génération d'une image assemblée d'un dispositif électronique (200), le procédé comprenant :
l'obtention (102) d'un flux d'entrée comprenant une pluralité de trames par l'intermédiaire d'un dispositif de capture d'image ;
l'identification (104) d'un ou de plusieurs objets mobiles et d'une ou de plusieurs estampilles temporelles associées au mouvement de l'objet mobile ou des objets mobiles à partir d'une première trame et d'une seconde trame sélectionnées parmi la pluralité de trames ;
la détermination (106) d'une pluralité d'attributs associés à l'objet mobile ou aux objets mobiles à partir d'au moins une zone de chevauchement de la première trame et de la seconde trame ;
la normalisation (108) de la pluralité d'attributs déterminée par rapport à une pluralité d'attributs de dispositif associés au dispositif de capture d'image ;
la détermination (110) d'une trajectoire, associée à l'objet mobile ou aux objets mobiles et à une zone mobile du ou des objets mobiles dans la première trame et la seconde trame sur la base de la pluralité d'attributs normalisée ;
la réalisation (112) d'un parmi :
l'assemblage de la première trame au niveau d'un premier emplacement de la ou des zones de chevauchement où le ou les objets mobiles sont présents, ladite trajectoire de la première trame étant masquée pour régénérer une partie masquée de la seconde trame, et
l'assemblage de la première trame au niveau d'un second emplacement de ladite au moins une zone de chevauchement où le ou les objets mobiles ne sont pas présents, ladite trajectoire à partir de la première trame étant masquée pour régénérer une partie masquée de la seconde trame ; et
la génération (114) de l'image assemblée en assemblant la première trame avec la partie masquée de la seconde trame.

2. Procédé de la revendication 1, ladite première trame étant une trame précédente par rapport à une trame actuelle et ladite seconde trame étant la trame actuelle.

3. Procédé de la revendication 1, ladite pluralité d'attributs comprenant un ou plusieurs d'un mouvement relatif de l'objet mobile ou des objets mobiles, d'un rapport de zone d'échange de l'objet mobile ou des objets mobiles, d'une couleur de l'objet mobile ou des objets mobiles, d'une couleur d'arrière-plan, d'une taille de l'objet mobile ou des objets mobiles, d'une fréquence de trames, d'une vitesse de l'objet mobile ou des objets mobiles et d'un temps passé par l'objet mobile ou les objets mobiles
dans la première trame et ladite pluralité d'attributs de dispositif comprenant un ou plusieurs d'une vitesse du dispositif de capture d'image et d'une direction d'un mouvement du dispositif de capture d'image.

4. Procédé de la revendication 1, comprenant en outre :
la réalisation d'une comparaison basée sur l'horodatage de la pluralité de trames par rapport à une métrique de qualité de chaque trame, chacune de la pluralité de trames étant mise en mémoire tampon avec une estampille temporelle associée à une trame correspondante ;
l'estimation d'une qualité de chacune de la pluralité de trames sur la base de la comparaison basée sur l'horodatage de la métrique de qualité de chaque trame, ladite métrique de qualité étant dérivée d'une densité spectrale de puissance, PSD, de chacune de la pluralité de trames ; et
la sélection de la première trame et de la seconde trame parmi la pluralité de trames sur la base de l'estimation.

5. Procédé de la revendication 4, ladite estimation de la qualité de chaque trame comprenant :
le traitement de la pluralité de trames en appliquant une pluralité de techniques d'apprentissage automatique, ML ;
le calcul de la PSD associée à chacune de la pluralité de trames traitées ; et
la sélection d'au moins deux trames parmi la pluralité de trames avec la PSD supérieure à un seuil prédéfini sur la base d'un regroupement basé sur la densité et d'une élimination des valeurs aberrantes, lesdites au moins deux trames comprenant la première trame et la seconde trame.

6. Procédé de la revendication 1, ladite identification du ou des objets mobiles comprenant :
la comparaison d'une pluralité de secondes grilles de trame de la seconde trame avec une pluralité de premières grilles de trame de la première trame en termes d'intensité de pixel, ladite intensité de pixel étant associée à la pluralité de secondes grilles de trame et à la pluralité de premières grilles de trame ;
la détermination que l'intensité de pixel associée à la pluralité de secondes grilles de trame ne correspond pas à l'intensité de pixel associée à la pluralité de premières grilles de trame ; et
l'identification de l'objet mobile ou des objets mobiles dans la première trame et la seconde trame sur la base de la détermination.

7. Procédé de la revendication 1, ladite détermination de la trajectoire de l'objet mobile ou des objets mobiles et de la zone mobile du ou des objets mobiles comprenant :
la détermination que la pluralité d'attributs, lorsqu'elle est normalisée, déplace le ou les objets mobiles ;
la détection d'une direction de mouvement du ou des objets mobiles dans la première trame et la seconde trame ; et
la génération de la trajectoire sur la base d'un sous-échantillonnage et d'un suréchantillonnage de la pluralité d'attributs.

8. Procédé de la revendication 1, ladite normalisation de la pluralité d'attributs déterminée par rapport à la pluralité d'attributs de dispositif comprenant la corrélation de la pluralité d'attributs avec la pluralité d'attributs de dispositif.

9. Procédé de la revendication 8, ladite corrélation de la pluralité d'attributs avec la pluralité d'attributs de dispositif comprenant la modification d'une valeur d'un ou de plusieurs attributs parmi la pluralité d'attributs par rapport à une valeur de la pluralité d'attributs de dispositif.

10. Dispositif électronique (200) destiné à générer une image assemblée, le dispositif électronique comprenant :
une mémoire (206) stockant des instructions ; et
au moins un processeur (204) couplé à la mémoire (206), lesdites instructions, lorsqu'elles sont exécutées par l'au moins un processeur, amenant le dispositif électronique (200) à fonctionner selon un procédé de l'une des revendications 1 à 9.

11. Support de stockage non transitoire lisible par ordinateur stockant des instructions qui, lorsqu'elles sont exécutées par au moins un processeur (204) d'un dispositif électronique (200), amènent le dispositif électronique à exécuter des opérations selon un procédé de l'une des revendications 1 à 9.
